(19) **Europäisches Patentamt**
**European Patent Office**
**Office européen des brevets**

(11) **EP 3 243 261 B1**

(12) **EUROPÄISCHE PATENTSCHRIFT**

(45) Veröffentlichungstag und Bekanntmachung des Hinweises auf die Patenterteilung:
**16.06.2021 Patentblatt 2021/24**

(21) Anmeldenummer: **16785171.6**

(22) Anmeldetag: **24.10.2016**

(51) Int Cl.:
**H02K 5/18** (2006.01)      **H02K 5/10** (2006.01)
**H02K 1/27** (2006.01)

(86) Internationale Anmeldenummer:
**PCT/EP2016/075532**

(87) Internationale Veröffentlichungsnummer:
**WO 2017/076677 (11.05.2017 Gazette 2017/19)**

(54) **GEKAPSELTER ELEKTROMOTOR MIT VERBESSERTER KÜHLUNG**

ENCAPSULATED ELECTRIC MOTOR HAVING IMPROVED COOLING

MOTEUR ÉLECTRIQUE BLINDÉ À REFROIDISSEMENT AMÉLIORÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.11.2015 DE 102015118695**

(43) Veröffentlichungstag der Anmeldung:
**15.11.2017 Patentblatt 2017/46**

(73) Patentinhaber: **ebm-papst Mulfingen GmbH & Co. KG**
**74673 Mulfingen (DE)**

(72) Erfinder:
• **STURM, Michael**
**97980 Bad Mergentheim-Rot (DE)**
• **MÜLLER, Werner**
**74673 Mulfingen-Seidelklingen (DE)**

(74) Vertreter: **Staeger & Sperling**
**Partnerschaftsgesellschaft mbB**
**Sonnenstraße 19**
**80331 München (DE)**

(56) Entgegenhaltungen:
EP-A1- 2 337 186      EP-A1- 2 429 067
DE-A1- 10 313 273      DE-U1-202015 105 804

EP 3 243 261 B1

**Beschreibung**

Die Erfindung betrifft einen Elektromotor, insbesondere Außenläufermotor, mit einem Statorgehäuse und einem gegenüber dem Statorgehäuse rotierbare Rotorgehäuse, das auf seiner dem Statorgehäuse axial zuweisenden Seite einen Kühlring aufweist.

Bei schnelldrehenden Elektromotoren ist eine ausreichende Kühlung von großer Bedeutung. Insbesondere bei geschlossenen bzw. gekapselten Motorgehäusen hoher IP-Schutzart mit einem geschlossenen Statorgehäuse und sich unmittelbar daran axial anschließendem Außenläuferrotor bleibt nur ein geringer, üblicherweise über eine Labyrinthdichtung abgedichteter Ringspalt, in dem eine Kühlströmung zwischen Statorgehäuse und Außenläuferrotor erzeugt werden kann. Ein derartiger gattungsgemäßer Elektromotor ist in der DE 103 13 274 A1 offenbart.

Zur Kühlung wird im Stand der, wie z.B. die DE103 13 273 A, regelmäßig ein Kühlring mit gerade nach radial außen verlaufenden Kühlrippen vorgesehen, die an den ebenfalls geradlinig nach radial außen verlaufenden Kühlrippen des Statorgehäuses vorbeirotieren können. Bei bestimmten Drehzahlen kann dabei eine pfeifende Geräuschentwicklung aufgrund der Wechselwirkung der Kühlflügel des Kühlrings mit den Kühlrippen der Statorbuchse entstehen, die zumeist durch eine Änderung der Anzahl der Kühlflügel zur Anzahl der der Kühlrippen behoben wurde. In der EP2429057 A wird ein Außenläufer für einen derartigen Motor beschrieben, der einen Kühlring mit teilweise V-förmigen Kühlrippen, deren jeweilige Spitze in Umfangsrichtung weist, umfasst.

Der Erfindung liegt die Aufgabe zugrunde, einen Elektromotor bereit zu stellen, dessen Kühlung hinsichtlich Geräuschentwicklung bei hohen Drehzahlen verbessert ist, ohne, dass sich die Kühlleistung reduziert.

Diese Aufgabe wird durch die Merkmalskombination gemäß Patentanspruch 1 gelöst.

Erfindungsgemäß wird ein Elektromotor, insbesondere ausgebildet als Außenläufermotor vorgeschlagen, mit einem Statorgehäuse und einem gegenüber dem Statorgehäuse rotierbaren Rotorgehäuse, das auf seiner dem Statorgehäuse axial zuweisenden Seite einen Kühlring aufweist, wobei an dem Statorgehäuse und an dem Kühlring jeweils eine Vielzahl von axial zueinander weisenden, in Umfangsrichtung verteilt angeordneten und im Rotationsbetrieb des Rotorgehäuses jeweils strömungstechnisch zusammenwirkenden ersten und zweiten Kühlrippen vorgesehen ist. In einer axialen Draufsicht verlaufen die ersten Kühlrippen radial nach außen. Die zweiten Kühlrippen sind in der axialen Draufsicht V-förmig ausgebildet und weisen mit ihrer jeweiligen Spitze in Umfangsrichtung, so dass eine rotierende Relativbewegung der ersten und zweiten Kühlrippen einen Kühlluftstrom zumindest zwischen dem Statorgehäuse und dem Rotorgehäuse erzeugt. Die rotierenden Kühlrippen wirken dabei als Kühlflügel.

Durch eine derartige Ausführung stehen die Kühlrippen am Statorgehäuse und Rotorgehäuse nicht mehr parallel in einer Ebene. Die sich in Umfangsrichtung erstreckenden V-förmigen Kühlrippen (Kühlflügel) kreuzen in ihrer Bewegung die radial nach außen verlaufenden und axial beabstandeten Kühlrippen. Erfindungsgemäß können die V-förmigen oder die radial nach außen verlaufenden Kühlrippen entweder am Statorgehäuse oder am Rotorgehäuse ausgebildet sein. Es handelt sich lediglich um eine kinematische Umkehr.

Die im Wesentlichen senkrechte Ausrichtung und Bewegung der Kühlrippen zueinander in Umfangsrichtung reduziert die Geräuschentwicklung bei niedrigen und hohen Drehzahlen, wobei Messungen eine Halbierung des Lärmpegels ergeben. Je nach Baugröße ergeben sich Reduzierungen um 2-4db. Zudem reduziert sich besonders bei hohen Drehzahlen die zur Rotation des Kühlrings benötigte Leistung und somit die Gesamtleistungsaufnahme des Elektromotors, wodurch wiederum der Gesamtwirkungsgrad des Elektromotors verbessert wird. Die Kühlleistung bleibt gegenüber der herkömmlichen Ausführung, beispielsweise der aus dem oben aufgeführten Stand der Technik, nahezu unverändert erhalten. Zudem ist günstig, dass die bisherigen Bauteile weiterverwendbar sind, da lediglich der Kühlring angepasst werden muss, um die Erfindung in einem Ausführungsbeispiel zu realisieren. Schließlich kann der Kühlring nachgerüstet oder auf unterschiedliche Elektromotoren montiert werden.

In einer bevorzugten Ausführungsvariante ist deshalb vorgesehen, die in der axialen Draufsicht V-förmigen Kühlrippen einteilig an dem rotierenden Kühlring auszubilden. Die radial, vorzugsweise gerade nach außen verlaufenden Kühlrippen sind dann an dem Statorgehäuse ortsfest angeordnet.

Der Kühlring kann in einer Variante als extra Bauteil vorgesehen oder alternativ in einen Flansch des Rotorgehäuses integriert werden. Bei letzterer Ausführung wird die Teilezahl und der Montageaufwand reduziert.

In einer vorteilhaften Ausführungsvariante ist vorgesehen, dass jeweils zwei benachbarte V-förmige Kühlrippen mit ihrer jeweiligen Spitze in Umfangsrichtung zueinander weisen. Die dabei erreichte Geräuschreduzierung ist am größten. Zudem ist der Aufbau drehrichtungsunabhängig.

In einer günstigen Weiterbildung der Erfindung ist die Gesamtzahl der radial nach außen verlaufenden Kühlrippen um den Faktor 1,2 - 1,8, vorzugsweise um den Faktor 1,5 größer als die Gesamtzahl der V-förmigen Kühlrippen. Soweit Einlegemuttern oder Einlegetaschen am Kühlring vorgesehen werden, die vergleichbar zu einem Kühlflügel wirken, kann die Anzahl der V-förmigen Kühlrippen entsprechend reduziert werden. Hierdurch kann sichergestellt werden, dass auch bei hohen Drehzahlen eine hohe Kühlleistung erreicht wird. Die genannten Faktoren entsprechen einer optimalen Abstimmung der Kühlrippenanzahl zueinander. Beispielsweise werden hierfür 32 ortsfeste Kühlrippen an dem Statorgehäuse und 21 V-förmige Kühlrippen (Kühlflügel) an dem Kühlring vorgesehen.

In einer günstigen Ausführungsform verlaufen die Schenkel der V-förmigen Kühlrippen gegenüber einer Umfangslinie des Kühlringes spiegelsymmetrisch. Die jeweilige Spitze der V-förmigen Kühlrippen endet dabei auf dem Kühlring radial mittig, d.h. auf einem Kühlrippen-Mitteldurchmesser S, der bestimmt ist durch die Hälfte der Summe aus dem Kühlrippen-Außendurchmesser D und dem Kühlrippen-Innendurchmesser d der V-förmigen Kühlrippen (S=(D+d)/2). In alternativen Lösungen kann eine Abweichung von ±5% nach radial innen oder außen berücksichtigt werden.

Ferner ist eine Ausführung günstig, bei der sich die in der axialen Draufsicht V-förmigen Kühlrippen bis zu einem radialen Außenrand des Kühlringes erstrecken und mit diesem bündig abschließen. Der Kühlrippen-Außendurchmesser und der Kühlringaußendurchmesser fallen dann zusammen.

Bei einer vorteilhaften Weiterbildung weisen die Schenkel der V-förmigen Kühlrippen eine konstante Schenkeldicke t von 0,8 - 3mm, vorzugsweise 1 - 2mm auf. Als Schenkeldicke ist dabei die Materialdicke der Schenkel in axialer Draufsicht definiert. Zudem ist eine Ausführung günstig, bei der die Schenkeldicke einer Axialdicke des Kühlringes ohne die Kühlrippen oder sonstige weitere Anbauten entspricht.

In einer weiteren Ausführungsvariante ist vorgesehen, dass der Winkelabstand W1 der jeweils benachbarten und aufeinander zuweisenden V-förmigen Kühlrippen bestimmt ist durch die Anzahl der V-förmigen Kühlrippen, so dass der Winkelabstand durch die Formel Winkelabstand W1=360°/Gesamtzahl der V-förmigen Kühlrippen/2 berechnet wird. Bei beispielhaft 22 V-förmigen Kühlrippen auf dem Kühlring ergibt sich ein Winkelabstand von W1=8,2°. Dabei ist stets an demselben Punkt der jeweiligen V-förmigen Kühlrippe zu messen.

Zudem wird der erfindungsgemäße Elektromotor dadurch positiv beeinflusst, dass der Öffnungswinkel W2 der V-förmigen Kühlrippen, d.h. der durch das "V" aufgespannte Winkel, in einem Bereich von 50-90°, vorzugsweise 60-80°, weiter bevorzugt 60° liegt. Der Öffnungswinkel W2 beeinflusst die Strömung zwischen den Kühlrippen des Statorgehäuses und Rotorgehäuses und trägt sowohl zur Reduzierung der Leistungsaufnahme des Kühlringes als auch zur Geräuschreduzierung bei gleichbleibender Kühlleistung bei.

In einer vorteilhaften Ausgestaltung des Elektromotors ist zudem vorgesehen, dass der Winkelabstand W3 in Umfangsrichtung zwischen zwei aneinander angrenzenden und zueinander weisenden Spitzen der V-förmigen Kühlrippen mindestens 8° ist. Bei geringeren Abständen erhöht sich die Geräuschentwicklung. Zudem wird der zwischen den Kühlrippen nutzbare Bereich sehr klein. Beispielsweise kann dann kein Befestigungsloch für eine Schraubverbindung mehr vorgesehen werden, an dem ein Schraubenkopf Platz finden müsste.

Bei dem Elektromotor grenzen das Statorgehäuse und Rotorgehäuse aneinander an und bilden zwischen sich einen Ringspalt, in dem sich die Kühlrippen gegenüber liegen. In einer günstigen Ausgestaltung ist dabei vorgesehen, dass der durch die lichte Weite zwischen den sich axial gegenüberliegenden radial nach außen verlaufenden und V-förmigen Kühlrippen bestimmte axiale Abstand A um den Mindest-Faktor 0,015 geringer ist als der Außendurchmesser D des Kühlringes, d.h. $A_{min}=D*0,015$. Der Abstand A bestimmt den zur Verfügung stehenden Luftraum für den Kühlluftstrom. Soweit er in dem angegebenen Bereich liegt, werden die vorteilhaften Effekte zur Geräuschreduzierung und Kühlleistung erzielt. Der maximale Abstand $A_{max}$ ist festgelegt auf $A_{max}=A_{min} \times 1,5$, da andernfalls die Kühlleistung zu stark zurückgeht.

Ferner hat sich als geometrisch vorteilhaft erwiesen, dass die axiale Kühlrippenhöhe H um einen Faktor 2 - 2,5 größer ist als der axiale Abstand A.

In einer für die Strömung vorteilhaften Ausführungsform weist der Kühlring auf seiner dem Statorgehäuse zuweisenden Oberfläche ausschließlich die V-förmigen Kühlrippen auf, so dass die Strömung unbeeinflusst durch undefinierte Störkanten erzeugbar ist. Soweit der Kühlring als eigenes Bauteil vorgesehen wird, kann er beispielsweise durch Rastverbindungen am Rotorgehäuse befestigt werden. Die Ventilatorlaufradbefestigung kann beispielsweise durch Gewindestehbolzen oder Gewindedurchzüge realisiert sein.

In einer Weiterbildung des Elektromotors ist zudem vorgesehen, dass auf den radial nach außen verlaufenden Kühlrippen eine ringscheibenförmige Einlaufdüse angeordnet ist, deren zu den V-förmigen Kühlrippen weisende Oberfläche glatt oder gewellt ist. Die Einlaufdüse trennt die Kühlrippen des Statorgehäuses und Rotorgehäuses zumindest abschnittsweise strömungstechnisch voneinander, so dass eine Geräuschentwicklung durch die Wechselwirkung der Kühlrippen (Kühlflügel-Kühlrippen) vermieden werden kann. Die Einlaufdüse kann über eine Schraubverbindung oder Rasthaken an der Statorbuchse befestigt werden. Soweit Schrauben verwendet werden sollen, weist die Einlaufdüse Versenkungslöcher auf, so dass die zu den V-förmigen Kühlrippen weisende Strömungsfläche von den Befestigungsmitteln unbeeinflusst bleibt.

Günstig ist eine Ausführungsform, bei der die Einlaufdüse eine zu dem radial nach außen verlaufenden Kühlrippen komplementäre Form aufweist, so dass die Einlaufdüse über ihre gesamte Radialerstreckung auf den radial nach außen verlaufenden Kühlrippen anliegt. Soweit die radial nach außen verlaufenden Kühlrippen einen axialen Versatz in ihrer Erstreckung aufweisen, wird die Einlaufdüse entsprechend ausgeformt und kann dabei zumindest teilweise konvex oder konkav gebildet sein. Generell bildet die Einlaufdüse dabei die axiale Oberflächengeometrie der V-förmigen Kühlrippen ab.

Die Einlaufdüse ist in einem Ausführungsbeispiel in einem radialen Mittelbereich auf den radial nach außen verlaufenden Kühlrippen angeordnet, so dass die radial nach außen verlaufenden Kühlrippen in radialer Richtung beidseitig über die Einlaufdüse hervorstehen. Der radial innen und radial außen liegende Bereich der sich gegenüber liegenden Kühlrippen ist damit frei von der Einlaufdüse. Hierdurch kann eine aerodynamische Ansaugdüse im Ringspalt erzeugt werden.

Die Einlaufdüse wirkt als eine Art Deckscheibe, die jedoch von den V-förmigen Kühlrippen unabhängig ist, so dass ein definierter und orientierter Luftstrom erzeugbar und die Kühlwirkung maximierbar ist. Bevorzugtes Material für die Einlaufdüse ist Kunststoff. Befestigbar ist die Einlaufdüse an dem Statorgehäuse über Schrauben, Rast- oder Pressverbindungen.

Grundsätzlich sind alle offenbarten Merkmale beliebig kombinierbar, soweit dies technisch möglich ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Fig. 1     einen Elektromotor in einer Explosionsdarstellung;

Fig. 2     eine perspektivische Ansicht des Rotorgehäuses;

Fig. 3     eine Detailansicht des Kühlringes;

Fig. 4     eine seitliche teilweise Schnittansicht des Elektromotors;

Fig. 5     ein Detail aus Fig. 4;

Fig. 6     einen Elektromotor in einer weiteren Ausbildung in einer Explosionsdarstellung;

Fig. 7     eine seitliche teilweise Schnittansicht des Elektromotors aus Figur 6;

Fig. 8     ein Detail aus Fig. 7.

Gleiche Bezugszeichen benennen gleiche Teile in allen Ansichten.

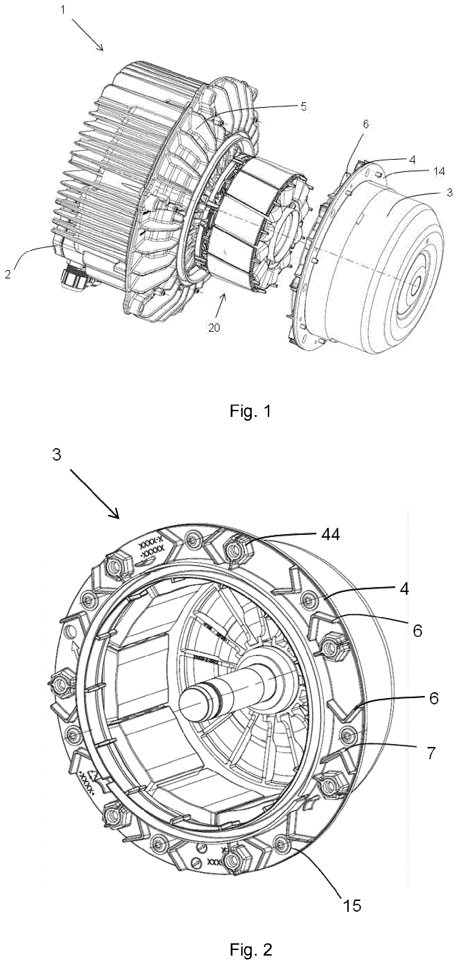

In Figur 1 ist ein erstes Ausführungsbeispiel des Elektromotors 1 ausgebildet als Außenläufermotor in einer teilweisen Explosionsdarstellung gezeigt. In das Statorgehäuse 2 ist der Stator 20 eingesetzt. Das Statorgehäuse 2 weist um den Stator 20 in Umfangsrichtung verteilt radial nach außen verlaufende Kühlrippen 5 auf. Die Kühlrippen 5 sind als Stege ausgebildet, deren axiale Höhenerstreckung sich nach radial außen hin vergrößert, so dass ein Axialversatz gebildet wird. An dem Statorgehäuse 2 wird das den Außenläufer bildende und den Stator 20 umschließende Rotorgehäuse 3 über eine Labyrinthdichtung dichtend befestigt. Das Rotorgehäuse 3 weist einen Flansch 14 auf, an dem der aus Kunststoff gebildete Kühlring 4 montiert ist.

Figur 2 zeigt das Rotorgehäuse 3 mit dem daran befestigten Kühlring 4 in perspektivischer Ansicht. An dem Kühlring 4 sind in Umfangsrichtung verteilt eine Vielzahl von V-förmigen Kühlrippen 6 (Kühlflügel) vorgesehen, die im Rotationsbetrieb des Außenläufers als Kühlflügel wirken. Jeweils zwei V-förmige Kühlrippen 6 (Kühlflügel) sind mit ihren Spitzen 7 in Umfangsrichtung aufeinander zuweisend einteilig an dem Kühlring 4 ausgebildet. Insgesamt sind sieben Kühlrippenpaare in gleichen Abständen auf dem Kühlring 4 verteilt. Die Gesamtanzahl der V-förmigen Kühlrippen 6 (Kühlflügel) ist somit deutlich geringer als die Gesamtanzahl der Kühlrippen 5 auf dem Statorgehäuse 2. Es sind jedoch auch Einlegemuttern 44 vorgesehen, die ebenfalls eine Kühlwirkung erzielen, so dass die Anzahl der V-förmigen Kühlrippen 6 (Kühlflügel) weiter reduziert ist. Soweit keine Einlegemuttern 44 vorgesehen werden, erhöht sich die Anzahl der Kühlrippen 6 entsprechend. Über Schrauben 15 wird der Kühlring 4 an dem Flansch 14 des Statorgehäuses 3 befestigt. Die Schrauben 15 sind jeweils zwischen den zueinander weisenden V-förmigen Kühlrippen 6 (Kühlflügel) angeordnet.

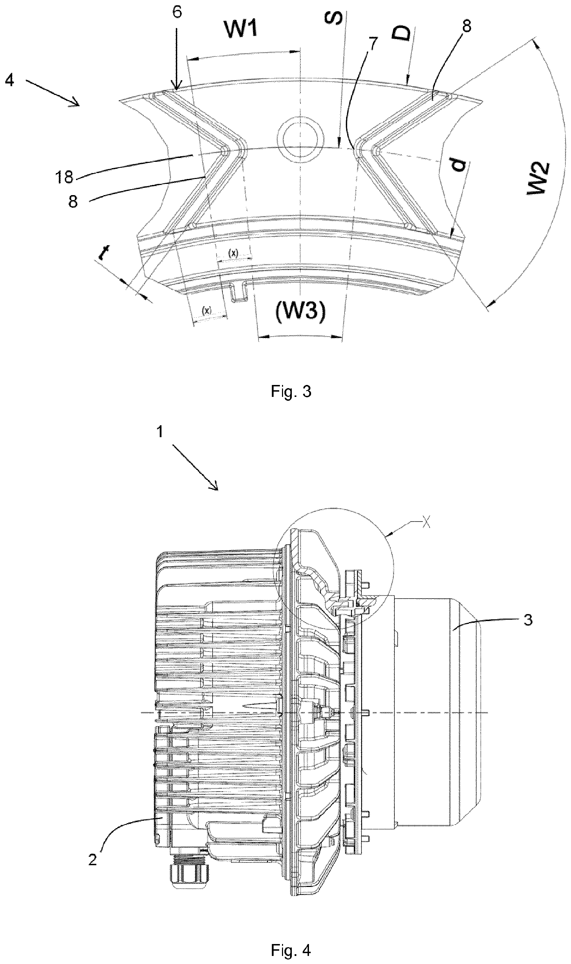

Bezugnehmend auf Figur 3 ist die Geometrie der V-förmigen Kühlrippen 6 (Kühlflügel) auf dem Kühlflügel 4 detaillierter am Beispiel eines Paares zueinander weisender Kühlrippen 6 darstellt. Die weiteren Paare sind identisch ausgebildet. Die beiden das V aufspannenden Schenkel 8 der jeweiligen V-förmigen Kühlrippen 6 (Kühlflügel) sind gegenüber der Umfangslinie 18 des Kühlringes 4 spiegelsymmetrisch. Die jeweilige Spitze 7 der V-förmigen Kühlrippen 6 (Kühlflügel) endet dabei auf dem Kühlrippen-Mitteldurchmesser S, der mittig zwischen dem Kühlrippen-Außendurchmesser D und dem Kühlrippen-Innendurchmesser d der V-förmigen Kühlrippen 6 (Kühlflügel) verläuft. Die zueinander weisenden Spitzen 7 weisen in Umfangsrichtung einen Winkelabstand W3 (Klammermaß) von über 10° auf. In der gezeigten axialen Draufsicht erstrecken sich die V-förmigen Kühlrippen 6 (Kühlflügel) jeweils bis zu einem radialen Außenrand des Kühlrings 4 und schließen bündig mit diesem ab. Die Schenkel 8 der V-förmigen Kühlrippen 6 (Kühlflügel) weisen eine Schenkeldicke t von 1,5mm auf. Der Winkelabstand W1 der jeweils benachbarten und aufeinander zuweisenden V-förmigen Kühlrippen 6 (Kühlflügel) ist durch die Anzahl der V-förmigen Kühlrippen 6 (Kühlflügel) auf dem Kühlring 4 bestimmt und liegt im gezeigten Fall bei 8,6°. Als Messpunkt wird jeweils ein gleicher Abstand x von der jeweiligen Spitze 7 und dem in Umfangsrichtung gegenüberliegenden Ende der V-förmigen Kühlrippe 6 genutzt. Der Öffnungswinkel W2 der V-förmigen Kühlrippen 6 (Kühlflügel) liegt bei 80°.

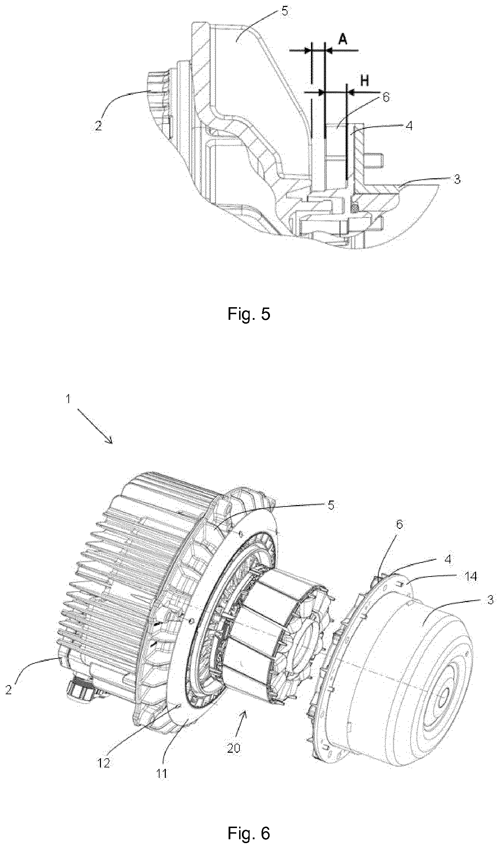

In Figur 4 ist eine seitliche teilweise Schnittansicht des fertig für den Betrieb montierten Elektromotors 1 mit einem in Figur 5 gezeigten Detail X zum Ringspalt zwischen Statorgehäuse 2 und Rotorgehäuse 3 dargestellt. Zwischen den V-förmigen Kühlrippen 6 (Kühlflügel) am Kühlring 4 und den radial gerade nach außen verlaufenden Kühlrippen 5 am Statorgehäuse 2 ist eine Abstand A vorgesehen, der durch die lichte Weite zwischen den sich axial gegenüberliegenden radial nach außen verlaufenden und V-förmigen Kühlrippen 5, 6 bestimmt ist. Die V-förmigen Kühlrippen 6 (Kühlflügel) weisen eine axiale Kühlrippenhöhe H auf, die doppelt so groß ist wie der Abstand A. Der Abstand A ist zudem so festgelegt, dass er um den Mindest-Faktor 0,015 geringer ist als der Außendurchmesser D des Kühlringes, d.h. $A_{min}=D*0,015$. Der Maximalabstand Amax beträgt $A_{max}=A_{min}$ x 1,5. Für einen beispielhaften Kühlring 4 mit einem Kühlrippen-Außendurchmesser D von 230mm ist der Abstand $A_{min}$ 3,45 mm und $A_{max}$=5,175mm. Durch die Rotation des Außenläufers mit dem Kühlring 4 wird ein Kühlluftstrom entlang der Kühlrippen 5 am Statorgehäuse 2 erzeugt, wodurch die Elektronikbauteile im Statorgehäuse 2 gekühlt werden.

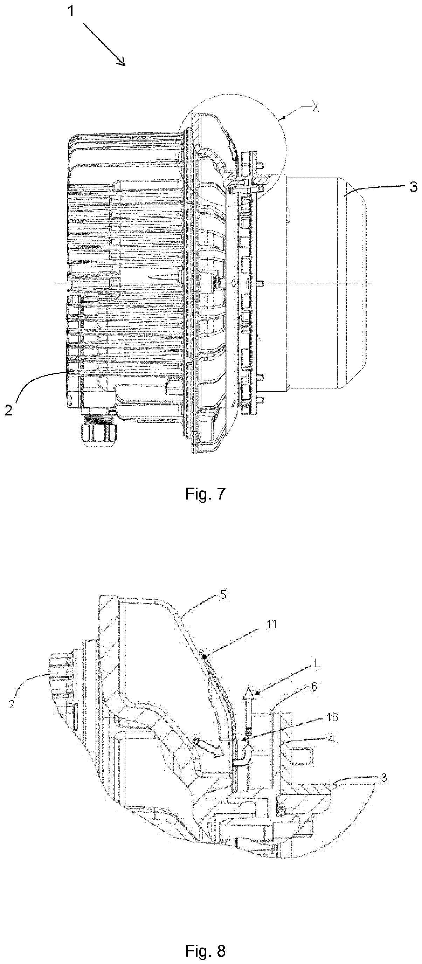

Die Figuren 6 bis 8 zeigen ein weiteres Ausführungsbeispiel, wobei die für die Figuren 1 bis 5 genannten Merkmale mutatis mutandis gelten. Zusätzlich ist an dem Statorgehäuse 2 auf den radial nach außen verlaufenden Kühlrippen 5 eine ringscheibenförmige Einlaufdüse 11 angeordnet, deren zu den V-förmigen Kühlrippen 6 (Kühlflügel) weisende Oberfläche glatt ist. In einer nicht gezeigten alternativen Ausführung ist die Oberfläche gewellt. Befestigt wird die Einlaufdüse 11 beispielsweise über Schrauben, die jedoch vollständig in Senklöchern 12 versenkt werden, um keinen strömungstechnischen Einfluss zu nehmen. Wie in den Figuren 6 und 8 zu erkennen, ist die Einlaufdüse 11 als Ringscheibe ausgebildet, die eine zu dem radial nach außen verlaufenden Kühlrippen 5 komplementäre Form aufweist, so dass sie über ihre gesamte Radialerstreckung auf den axialen Außenflächen der radial nach außen verlaufenden Kühlrippen 5 anliegt. Die Einlaufdüse 11 weist dabei dieselbe Biegung auf wie die axialen Außenflächen der Kühlrippen 5. Jedoch erstreckt sich die Einlaufdüse 11 in radialer Richtung nicht über die gesamte Länge der Kühlrippen 5, sondern ist nur in deren radialem Mittelbereich angeordnet ist, so dass die radial nach außen verlaufenden Kühlrippen 5 in radialer Richtung beidseitig über die Einlaufdüse 11 hervorstehen. Hierdurch kann eine Art Kanal 16 erzeugt und der in Figur 8 gezeigte Luftstrom L über die radial nach außen verlaufenden Kühlrippen 5 gesaugt sowie radial ausgeblasen werden. Zudem kann in einer nicht gezeigten weiteren Ausführungsform der Kanal auch axial verlängert und durch das und/oder entlang dem Statorgehäuse 2 geführt werden, so dass über den Kühlring 4 und dessen erzeugter Strömung ein Kühlluftstrom entlang der Elektronikbauteile im Statorgehäuse 2 erzielt werden kann.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Soweit vorliegend von radial nach außen verlaufenden Kühlrippen gesprochen wird, sind auch Ausführungen der Kühlrippen in geschwungener Form, z.B. S-förmig, vorwärts- oder rückwärtsgekrümmt umfasst.

**Patentansprüche**

1. Elektromotor, insbesondere Außenläufermotor, mit einem Statorgehäuse (2) und einem gegenüber dem Statorgehäuse rotierbare Rotorgehäuse (3), das auf seiner dem Statorgehäuse (2) axial zuweisenden Seite einen Kühlring (4) aufweist, wobei an dem Statorgehäuse (2) und an dem Kühlring (4) jeweils eine Vielzahl von axial zueinander weisenden, in Umfangsrichtung verteilt angeordneten und im Rotationsbetrieb des Rotorgehäuses jeweils strömungstechnisch zusammenwirkenden ersten und zweiten Kühlrippen (5, 6) vorgesehen ist, wobei in einer axialen Draufsicht die ersten Kühlrippen (5) radial nach außen verlaufen und wobei eine rotierende Relativbewegung der ersten und zweiten Kühlrippen (5, 6) einen Kühlluftstrom zumindest zwischen dem Statorgehäuse (2) und dem Rotorgehäuse (3) erzeugt, **dadurch gekennzeichnet, dass** die zweiten Kühlrippen (6) V-förmig ausgebildet sind und mit ihrer jeweiligen Spitze (7) in Umfangsrichtung weisen und dass jeweils zwei benachbarte V-förmige Kühlrippen (6) mit ihrer jeweiligen Spitze (7) in Umfangsrichtung zueinander weisen.

2. Elektromotor nach Anspruch 1 , **dadurch gekennzeichnet, dass** eine Gesamtzahl der radial nach außen verlaufenden Kühlrippen (5) um den Faktor 1,2 - 1,8, insbesondere um den Faktor 1,5, größer ist als eine Gesamtzahl der V-förmigen Kühlrippen (6).

3. Elektromotor nach zumindest einem der vorigen Ansprüche, **dadurch gekennzeichnet, dass** die in der axialen Draufsicht V-förmigen Kühlrippen (6) einteilig an dem Kühlring (4) ausgebildet sind.

4. Elektromotor nach zumindest einem der vorigen Ansprüche, **dadurch gekennzeichnet, dass** Schenkel (8) der V-förmigen Kühlrippen (6) gegenüber einer Umfangslinie des Kühlrings (4) spiegelsymmetrisch sind.

5. Elektromotor nach zumindest einem der vorigen Ansprüche, **dadurch gekennzeichnet, dass** sich die in der axialen Draufsicht V-förmigen Kühlrippen (6) bis zu einem radialen Außenrand des Kühlrings (4) erstrecken und mit diesem bündig abschließen.

6. Elektromotor nach zumindest einem der vorigen Ansprüche, **dadurch gekennzeichnet, dass** Schenkel (8) der V-förmigen Kühlrippen (6) eine Schenkeldicke t von 0,8-3mm, insbesondere 1-2mm, aufweisen.

7. Elektromotor nach zumindest einem der vorigen Ansprüche, **dadurch gekennzeichnet, dass** ein Winkelabstand W1 der jeweils benachbarten und aufeinander zuweisenden V-förmigen Kühlrippen (6) bestimmt ist durch die Anzahl der V-förmigen Kühlrippen (6), so dass der Winkelabstand W1 berechenbar wird durch die Formel: Winkelabstand W1=360°/Gesamtzahl der V-förmigen Kühlrippen/2.

8. Elektromotor nach zumindest einem der vorigen Ansprüche, **dadurch gekennzeichnet, dass** ein Öffnungswinkel W2 der V-förmigen Kühlrippen (6) in einem Bereich von 50-90°, insbesondere 60-80°, liegt.

9. Elektromotor nach zumindest einem der vorigen Ansprüche, **dadurch gekennzeichnet, dass** ein Winkelabstand W3 in Umfangsrichtung zwischen zwei aneinander angrenzenden und zueinander weisenden Spitzen (7) der V-förmigen Kühlrippen (6) mindestens 8° ist.

10. Elektromotor nach zumindest einem der vorigen Ansprüche, **dadurch gekennzeichnet, dass** ein durch eine lichte Weite zwischen den sich axial gegenüberliegenden, radial nach außen verlaufenden und V-förmigen Kühlrippen (6) bestimmter axialer Abstand A um den Faktor 0,015 geringer ist als der Außendurchmesser D des Kühlrings (4), d.h. A=D*0,015.

11. Elektromotor nach dem vorigen Anspruch, **dadurch gekennzeichnet, dass** eine axiale Kühlrippenhöhe H um einen Faktor 2 - 2,5 größer ist als der axiale Abstand A.

12. Elektromotor nach zumindest einem der vorigen Ansprüche, **dadurch gekennzeichnet, dass** auf den radial nach außen verlaufenden Kühlrippen (5) eine ringscheibenförmige Einlaufdüse (11) angeordnet ist, deren zu den V-förmigen Kühlrippen (6) weisende Oberfläche glatt oder gewellt ist.

13. Elektromotor nach dem vorigen Anspruch, **dadurch gekennzeichnet, dass** die Einlaufdüse (11) eine zu dem radial nach außen verlaufenden Kühlrippen (5) komplementäre Form aufweist, wobei sie über ihre gesamte Radialerstreckung auf den radial nach außen verlaufenden Kühlrippen (5) anliegt.

14. Elektromotor nach zumindest einem der vorigen Ansprüche 12 - 13, **dadurch gekennzeichnet, dass** die Einlaufdüse in einem radialen Mittelbereich auf den radial nach außen verlaufenden Kühlrippen (5) angeordnet ist, so dass die radial nach außen verlaufenden Kühlrippen (5) in radialer Richtung beidseitig über die Einlaufdüse (11) hervorstehen.

## Claims

1. An electric motor, particularly an external rotor motor, having a stator housing (2) and a rotor housing (3) rotatable with respect to the stator housing, which rotor housing (3) has a cooling ring (4) disposed on its side which axially faces the stator housing (2), wherein a plurality of first and second cooling fins (5, 6) which face each other axially and are arranged so as to be distributed in the respective circumferential directions and which first and second cooling fins (5, 6) interact fluidically when the rotor housing is in rotating operation are provided at the stator housing (2) and the cooling ring (4), wherein viewed in an axial plan view the first cooling fins (5) extend radially outwardly, wherein a rotating relative movement of the first and second cooling fins (5, 6) generates a cooling air flow at least between the stator housing (2) and the rotor housing (3), **characterized in that** the second cooling fins (6) are V-shaped and direct with their apices (7) in the circumferential direction, and **in that** each pair of neighbouring V-shaped cooling fins (6) has its respective apices (7) directed toward each other in the circumferential direction.

2. The electric motor according to claim 1, **characterized in that** a total number of radially outwardly extending cooling fins (5) is greater than the total number of the V-shaped cooling fins (6), by a factor of 1.2 to 1.8, particularly a factor of 1.5.

3. The electric motor according to at least one of the preceding claims, **characterized in that** the cooling fins (6) which have a V-shape when viewed in an axial plan view are formed one-piece with the cooling ring (4).

4. The electric motor according to at least one of the preceding claims, **characterized in that** legs (8) of the V-shaped cooling fins (6) have mirror symmetry with respect to a circumferential line of the cooling ring (4).

5. The electric motor according to at least one of the preceding claims, **characterized in that** the cooling fins (6) which have a V-shape when viewed in an axial plan view extend up to a radially outer edge of the cooling ring (4), and their respective ends are flush with said outer edge.

6. The electric motor according to at least one of the preceding claims, **characterized in that** legs (8) of the V-shaped cooling fins (6) have a leg thickness $t$ of 0.8 to 3 mm, particularly 1 to 2 mm.

7. The electric motor according to at least one of the preceding claims, **characterized in that** an angular separation W1 between the respectively neighbouring and directed toward each other V-shaped cooling fins (6) is determined by the number of V-shaped cooling fins (6), so as to the angular separation W1 can be calculated from the formula:

$$\text{Angular separation W1} = 360° / (\text{Total number of V-shaped cooling fins}) / 2.$$

8. The electric motor according to at least one of the preceding claims, **characterized in that** an angle of opening W2 of the V-shaped cooling fins (6) has a value in a range of 50-90°, preferably 60-80°.

9. The electric motor according to at least one of the preceding claims, **characterized in that** an angular separation W3 in the circumferential direction between two neighbouring apices (7) of V-shaped cooling fins (6) which apices (7) are directed toward each other is at least 8°.

10. The electric motor according to at least one of the preceding claims, **characterized in that** an axial spacing A determined by the open width (gap) between the axially opposite, radially outwardly extending fins (5) and the V-shaped cooling fins (6) is less than the outer diameter D of the cooling ring (4) by a factor of 0.015, i.e. A = D*0.015.

11. The electric motor according to the preceding claim, **characterized in that** an axial cooling fin height H is greater than the axial spacing A by a factor of 2 to 2.5.

12. The electric motor according to at least one of the preceding claims, **characterized in that** an inlet nozzle (11) in the form of a ring-shaped disc is disposed on the radially outwardly extending cooling fins (5), the surface of which disc which faces the V-shaped cooling fins (6) is smooth (even) or has a corrugated shape.

13. The electric motor according to the preceding claim, **characterized in that** the inlet nozzle (11) has a shape, which is complementary to the radially outwardly extending cooling fins (5), wherein said inlet nozzle (11) is disposed against said cooling fins (5) over its entire radial extent.

14. The electric motor according to at least one of the preceding claims 12 and 13, **characterized in that** the inlet nozzle, in a radially middle region, is arranged on the radially outwardly extending cooling fins (5), such that said radially outwardly extending cooling fins (5) protrude over the inlet nozzle (11) on both sides in the radial direction.

**Revendications**

1. Moteur électrique, en particulier moteur à induit extérieur, comprenant un carter de stator (2) et un carter de rotor (3) tournant par rapport au carter de stator et présentant sur son côté tourné axialement vers le carter de stator (2) une bague de refroidissement (4), dans lequel, sur le carter de stator (2) et sur la bague de refroidissement (4) est prévue respectivement une pluralité de premières et deuxièmes ailettes de refroidissement (5, 6), tournées axialement les unes vers les autres, réparties dans la direction circonférentielle, et coopérant respectivement de manière fluidique en fonctionnement de rotation du carter de rotor, dans lequel, dans une vue de dessus axiale, les premières ailettes de refroidissement (5) s'étendent radialement vers l'extérieur, et un mouvement relatif tournant des premières et deuxièmes ailettes de refroidissement (5, 6) produit un courant d'air de refroidissement au moins entre le carter de stator (2) et le carter de rotor (3),
**caractérisé en ce que** les deuxièmes ailettes de refroidissement (6) sont réalisées en forme de V et pointent dans la direction circonférentielle avec leur sommet (7) respectif, et **en ce que** respectivement deux ailettes de refroidissement en forme de V (6) voisines pointent dans la direction circonférentielle avec leur sommet (7) respectif.

2. Moteur électrique selon la revendication 1, **caractérisé en ce qu'**un nombre total des ailettes de refroidissement (5) s'étendant radialement vers l'extérieur est supérieur d'un facteur de 1,2 à 1,8, en particulier d'un facteur 1,5, à un nombre total des ailettes de refroidissement en forme de V (6).

3. Moteur électrique selon au moins l'une des revendications précédentes, **caractérisé en ce qu'**en vue de dessus axiale, les ailettes de refroidissement en forme de V (6) sont réalisées d'un seul tenant sur la bague de refroidissement (4).

4. Moteur électrique selon au moins l'une des revendications précédentes, **caractérisé en ce que** des branches (8) des ailettes de refroidissement en forme de V (6) sont symétriques par rapport à une ligne circonférentielle de la bague de refroidissement (4).

5. Moteur électrique selon au moins l'une des revendications précédentes, **caractérisé en ce que** les ailettes de refroidissement en forme de V (6) en vue de dessus axiale s'étendent jusqu'à un bord extérieur radial de la bague de refroidissement (4) et se terminent en affleurement avec celui-ci.

6. Moteur électrique selon au moins l'une des revendications précédentes, **caractérisé en ce que** des branches (8) des ailettes de refroidissement en forme de V (6) présentent une épaisseur de branche t de 0,8 à 3 mm, en particulier de 1 à 2 mm.

7. Moteur électrique selon au moins l'une des revendications précédentes, **caractérisé en ce qu'**une distance angulaire W1 des ailettes de refroidissement en forme de V (6), respectivement voisines et tournées les unes vers les autres, est déterminée par le nombre des ailettes de refroidissement en forme de V (6) de sorte que la distance d'angle W1 peut être calculée par la formule : distance angulaire W1 = 360° / nombre total des ailettes de refroidissement en forme de V / 2.

8. Moteur électrique selon au moins l'une des revendications précédentes, **caractérisé en ce qu'**un angle d'ouverture W2 des ailettes de refroidissement en forme de V (6) est compris dans une plage de 50 à 90°, en particulier de 60 à 80°.

9. Moteur électrique selon au moins l'une des revendications précédentes, **caractérisé en ce qu'**une distance angulaire W3 dans la direction circonférentielle est égale à au moins 8° entre deux sommets (7) adjacents et tournés l'un vers l'autre des ailettes de refroidissement en forme de V (6).

10. Moteur électrique selon au moins l'une des revendications précédentes, **caractérisé en ce qu'**une distance axiale A, déterminée par une largeur libre entre les ailettes de refroidissement en forme de V (6) axialement opposées les unes aux autres et s'étendant radialement vers l'extérieur, est inférieure d'un facteur 0,015 au diamètre extérieur D de la bague de refroidissement (4), c'est-à-dire A = D*0,015.

11. Moteur électrique selon la revendication précédente, **caractérisé en ce qu'**une hauteur d'ailette de refroidissement H est supérieure d'un facteur 2 à 2,5 à la distance axiale A.

12. Moteur électrique selon au moins l'une des revendications précédentes, **caractérisé en ce que** sur les ailettes de refroidissement (5) s'étendant radialement vers l'extérieur est disposée une buse d'entrée en forme de disque annulaire (11) dont la surface tournée vers les ailettes de refroidissement en forme de V (6) est lisse ou ondulée.

13. Moteur électrique selon la revendication précédente, **caractérisé en ce que** la buse d'entrée (11) présente une forme complémentaire aux ailettes de refroidissement (5) s'étendant radialement vers l'extérieur, ladite buse étant en appui sur toute son extension radiale contre les ailettes de refroidissement (5) s'étendant radialement vers l'extérieur.

14. Moteur électrique selon au moins l'une des revendications précédentes 12 à 13, **caractérisé en ce que** la buse d'entrée est disposée dans une zone centrale radiale sur les ailettes de refroidissement (5) s'étendant radialement vers l'extérieur de sorte que les ailettes de refroidissement (5) s'étendant radialement vers l'extérieur dépassent des deux côtés de la buse d'entrée (11) dans la direction radiale.

Fig. 1

Fig. 2

EP 3 243 261 B1

Fig. 3

Fig. 4

11

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10313274 A1
- DE 10313273 A

- EP 2429057 A